Europäisches Patentamt

European Patent Office

Office européen des brevets

(11) Veröffentlichungsnummer: **0 255 066 B1**

(12) **EUROPÄISCHE PATENTSCHRIFT**

(45) Veröffentlichungstag der Patentschrift: **08.04.92**

(21) Anmeldenummer: **87110767.8**

(22) Anmeldetag: **24.07.87**

(51) Int. Cl.⁵: **G02B 6/38**

(54) **Vorrichtung mit Lichtwellenleitersteckverbindung.**

(30) Priorität: **29.07.86 DE 8620245 U**

(43) Veröffentlichungstag der Anmeldung:
**03.02.88 Patentblatt 88/05**

(45) Bekanntmachung des Hinweises auf die
Patenterteilung:
**08.04.92 Patentblatt 92/15**

(84) Benannte Vertragsstaaten:
**AT BE CH DE ES FR GB IT LI NL SE**

(56) Entgegenhaltungen:
**EP-A- 0 034 987**
**DE-A- 2 330 664**
**DE-U- 7 535 713**
**GB-A- 2 084 345**
**US-A- 1 531 917**

(73) Patentinhaber: **SIEMENS AKTIENGESELL-SCHAFT**
**Wittelsbacherplatz 2**
**W-8000 München 2(DE)**

(72) Erfinder: **Bruch, Helmut, Dipl.-Ing.**
**Päwesiner Weg 33**
**W-1000 Berlin 20(DE)**
Erfinder: **Pohl, Peter, Dipl.-Ing.**
**Lohfeldstrasse 12**
**W-8033 Krailling(DE)**

**Beschreibung**

Die Erfindung betrifft eine Steckervorrichtung mit einer oder mehreren Lichtwellenleiter-Steckverbindungen aus jeweils zwei Teilen, von denen das eine jeweils stiftförmig und das andere jeweils buchsenförmig ausgebildet ist, und die je einen zylindrischen Abschnitt aufweisen, deren Dimensionen so aufeinander abgestimmt sind, daß nach dem Zusammenstecken der beiden Teile der zylindrische Abschnitt des stiftförmigen Teiles im zylindrischen Abschnitt des buchsenförmigen Teils zentriert gehalten ist, wobei wenigstens eines der Teile einen vorderen, kegelstumpfförmigen Abschnitt aufweist und mit Einrichtungen zur Lagerung wenigstens jeweils eines der beiden Teile jeder Steckverbindung unter Gewährleistung eines radialen Spiels sowie mit Einrichtungen zur axialen Belastung des betreffenden Teils in Steckrichtung mit einer Federkraft.

Eine solche Vorrichtung ist schon aus dem DE-GM 75 35 713 bekannt. Bei dieser bekannten Vorrichtung besteht die Lichtwellenleiter- Steckverbindung aus einem stiftförmigen Teil, der mittels einer Feder längsbeweglich gelagert ist und der in einen buchsenförmigen Teil eingeschoben werden kann. Dadurch wird die Verbindung zwischen zwei Lichtwellenleitern hergestellt. Der stiftförmige Teil ist außerdem querbeweglich gelagert, um Toleranzen auszugleichen, die zwischen der Lichtwellenleitersteckverbindung und z.B. einer weiteren derartigen Steckverbindung der Vorrichtung auftreten können. Seitlicher Versatz des stiftförmigen Teils bezüglich des buchsenförmigen Teils kann aber zu einer Schrägstellung des stiftförmigen Teils führen, weil die Querbeweglichkeit des stiftförmigen Teils durch die Feder reibungsbehaftet ist. Beim Einschieben des stiftförmigen Teils in den buchsenförmigen Teil kann es dabei zu Schwierigkeiten kommen, wenn die ineinanderzusteckenden zylindrischen Abschnitte der beiden Teile aufeinander sehr eng toleriert sind.

Zur Vereinfachung des Einschiebens des stiftförmigen Teils in das buchsenförmige Teil weist das stiftförmige Teil gemäß dem genannten DE-GM an seinem vorderen Ende einen kegelstumpfförmigen, sich zum zylindrischen Abschnitt hin verdickenden Abschnitt auf. Dennoch kann sich das stiftförmige Teil in dem buchsenförmigen Teil verkanten.

Es ist daher Aufgabe vorliegender Erfindung, eine Steckervorrichtung der eingangs geschilderten Art so weiterzubilden, daß ein Einstecken des stiftförmigen Teils in das buchsenförmige Teil ungehindert möglich ist.

Erfindungsgemäß ergibt sich die Lösung dieser Aufgabe dadurch, daß bei wenigstens einem der beiden Teile direkt zwischen einem vorderen, kegelstumpfförmigen Abschnitt und dem hinteren, zylindrischen Abschnitt ein kegelstumpfförmiger Zwischenabschnitt vorgesehen ist, dessen Kegelwinkel kleiner als der des vorderen kegelstumpfförmigen Abschnitts ist, daß der Durchmesser jedes der kegelstumpfförmigen Abschnitte des stiftförmigen Teils in Richtung auf dessen zylindrischen Abschnitt hin zunimmt und daß der Innendurchmesser jedes der kegelstumpfförmigen Abschnitte des buchsenförmigen Teils in Richtung auf dessen zylindrischen Abschnitt hin abnimmt.

Ein Vorteil der Erfindung ist darin zu sehen, daß auf zusätzliche Führungsaußenhülsen verzichtet werden kann. Der konische Zwischenabschnitt bewirkt, daß die Verkantungsgefahr beim Zusammenstecken der Steckverbindung erheblich reduziert ist.

Im Rahmen der Erfindung kann weiter vorgesehen sein, daß die Einrichtungen zur axialen Belastung von Teilen in Steckrichtung mit einer Federkraft durch jeweils eine Schraubenfeder gebildet sind, die an einem an einer Wand anliegenden Ring abgestützt ist, dessen von einem der beiden Teile durchsetzte Bohrung einen größeren Durchmesser hat, als das durchsetzende Teil.

Die Erfindung sieht darüber hinaus vor, daß das radiale Spiel, mit welchem eines der beiden Teile gelagert ist, sich zu gleichen Teilen aufteilt, in ein Spiel zwischen Innendurchmesser des Rings und Außendurchmesser des ent sprechenden Teils, sowie in ein Spiel zwischen Außendurchmesser des Rings und einem den Bewegungsspielraum des Rings beschränkenden Begrenzungsteil, das mit der Gehäusewand verbunden ist.

Auf diese Weise kann sich z.B. das stiftförmige Teil schräg stellen, um einen Achsenversatz zwischen den beiden Teilen auszugleichen, ohne daß dabei eine Gleitreibung zwischen dem Ring und der Wand überwunden werden muß.

Als weiteres Ausgestaltungsmerkmal der Erfindung ist vorgesehen, daß der Zwischenabschnitt einen Kegelwinkel kleiner 1 Grad aufweist, und daß beide Teile aus Hartmetall, Keramik oder einem anderen Stoff mit ähnlichen Materialeigenschaften bestehen.

Eine weitere Ausgestaltung der Erfindung sieht vor, daß der Zwischenabschnitt lediglich beim buchsenförmigen Teil vorgesehen ist.

Weiter kann vorteilhaft vorgesehen sein, daß eine oder mehrere Steckverbindungen in einer gemeinsamen Fassung zusammen mit einer oder mehreren galvanischen Steckverbindungen angeordnet sind.

Nachfolgend wird anhand einer Fig. ein Ausführungsbeispiel der Erfindung näher erläutert.

Die Fig. zeigt, teilweise im Schnitt und in Seitenansicht, eine Vorrichtung, die ein stiftförmiges Teil 1 besitzt, welches in ein buchsenförmiges Teil 2 eingeschoben werden kann. Das stiftförmige Teil 1 durchdringt eine ortsfeste Wand 5 und wird durch die Schraubendruckfeder 7, die das Teil 1 umgibt und sich auf einer Seite an einem vorderen Bund 3 des stiftförmigen Teils 1 abstützt und die auf der anderen Seite gegen einen Ring 6 drückt, der an der Wand 5 anliegt und einen größeren Durchmesser hat als die Wandbohrung 12, in einer vorderen Stellung gehalten. Das stiftförmige Teil 1 das den Ring durchsetzt, wird dabei in axialer Richtung durch einen weiteren Bund 4, welcher einen größeren Durchmesser als die Bohrung 12 der Wand 5 besitzt, gegen Herausfallen gesichert.

Sowohl das stiftförmige Teil 1 als auch das buchsenförmige Teil 2 besitzen jeweils an ihrem vorderen Ende einen konischen Abschnitt 8,8'. Das buchsenförmige Teil 2 weist innen zusätzlich einen gegenüber dem vorderen Abschnitt 8 geringer geneigten konischen Zwischenabschnitt 9 auf, der unmittelbar an den vorderen Abschnitt 8 anschließt. Der Abschnitt 9 geht dann in einen hohlzylindrischen Abschnitt 15 des buchsenförmigen Teils 2 über.

Treffen Teil 1 und Teil 2 mit radialem Versatz ihrer Mittenachsen 10, 11 aufeinander, so ergibt sich zunächst eine Schrägstellung des Teils 1 gegenüber dem Teil 2, wie in der FIG gezeigt ist.

Dabei wird durch die Aufteilung des Spiels sichergestellt, daß beim Beginn des Ineinandersteckens der beiden Teile 1,2 immer ein Spiel zwischen Innendurchmesser 6a des Rings 6 und Außendurchmesser 1a des Teils 1 vorhanden ist und dadurch im ersten Moment des Einsteckens keine Haft- bzw. Gleitreibung zwischen Ring 6 und Wand 5 überwunden werden muß.

Beim weiteren Einführen des Teils 1 in Teil 2 liegt das stiftförmige Teil 1 mit einer Kante 16 die zwischen dem Abschnitt 8' des Teils 1 und seinem zylindrischen Abschnitt 18 vorhanden ist, am Zwischenabschnitt 9 des Teils 2 an. Außerdem wirkt eine Kante 17 die zwischen dem Abschnitt 8 und dem Abschnitt 9 des Teils 2 vorhanden ist, auf den zylindrischen Abschnitt 18 des stiftförmigen Teils 1 ein.

Dadurch entsteht eine Hebelwirkung zwischen Angriffspunkten 13 und 14, die eine Richtkraft zu Folge hat, welche die Reibungswirkung zwischen dem Ring 6 und der Wand 5 überwindet und die Achse 10 von Teil 2 mit der Achse 11 von Teil 1 zur Deckung bringt. Ein Einschieben des Abschnitts 18 in den Abschnitt 15 ist nunmehr ohne Probleme möglich.

Eine weitere zweckmäßige Anwendung der Erfindung könnte vorsehen, erfindungsgemäße Lichtwellenleitersteckvorrichtungen in Kombination mit galvanischen Steckverbindungen in einer gemeinsamen Fassung einzusetzen.

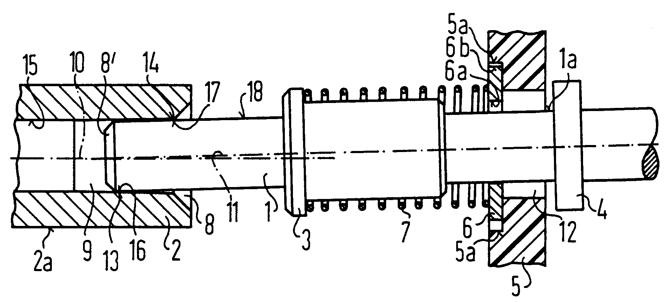

## Patentansprüche

1. Steckervorrichtung mit einer oder mehreren Lichtwellenleiter-Steckverbindungen aus jeweils zwei Teilen, von denen das eine jeweils stiftförmig und das andere jeweils buchsenförmig ausgebildet ist, und die je einen zylindrischen Abschnitt aufweisen, deren Dimensionen so aufeinander abgestimmt sind, daß nach dem Zusammenstecken der beiden Teile der zylindrische Abschnitt des stiftförmigen Teiles im zylindrischen Abschnitt des buchsenförmigen Teils zentriert gehalten ist wobei wenigstens eines der Teile einen vorderen, kegelstumpfförmigen Abschnitt aufweist und mit Einrichtungen zur Lagerung wenigstens jeweils eines der beiden Teile jeder Steckverbindung unter Gewährleistung eines radialen Spiels sowie mit Einrichtungen zur axialen Belastung des betreffenden Teils in Steckrichtung mit einer Federkraft, **dadurch gekennzeichnet,** daß bei dem wenigstens einen der beiden Teile (1,2) direkt zwischen dem vorderen, kegelstumpfförmigen Abschnitt (8) und dem hinteren, zylindrischen Abschnitt (15) ein kegelstumpfförmiger Zwischenabschnitt (9) vorgesehen ist, dessen Kegelwinkel kleiner als der des vorderen kegelstumpfförmigen Abschnitts (8) ist, daß der Durchmesser jedes der kegelstumpfförmigen Abschnitte (8) des stiftförmigen Teils (1) in Richtung auf dessen zylindrischen Abschnitt (18) hin zunimmt und daß der Innendurchmesser jedes der kegelstumpfförmigen Abschnitte (8,9) des buchsenförmigen Teils (2) in Richtung auf dessen zylindrischen Abschnitt (15) hin abnimmt.

2. Vorrichtung nach Anspruch 1, **dadurch gekennzeichnet,** daß die Einrichtungen zur axialen Belastung von Teilen in Steckrichtung mit einer Federkraft durch jeweils eine Schraubenfeder (7) gebildet sind, die an einem an einer Wand (5) anliegenden Ring (6) abgestützt ist, dessen von einem der beiden Teile (1,2) durchsetzte Bohrung einen größeren Durchmesser hat, als das durchsetzende Teil.

3. Vorrichtung nach einem der vorangehenden Ansprüche, **dadurch gekennzeichnet,** daß das radiale Spiel, mit welchem eines der beiden Teile gelagert ist, sich zu gleichen Teilen aufteilt, in ein Spiel zwischen Innendurchmesser (6a) des Rings (6) und Außendurchmesser (1a,2a) des entsprechenden Teils (1,2), sowie in ein Spiel zwischen Außendurchmesser (6b) des Rings (6) und einem den Bewegungsspielraum des Rings (6) beschränkenden Begrenzungsteil (5a), das mit der Gehäusewand (5) verbunden ist.

4. Vorrichtung nach Anspruch 1 oder 2, **dadurch gekennzeichnet,** daß der Zwischenabschnitt (9) einen Kegelwinkel kleiner 1 Grad aufweist.

5. Vorrichtung nach einem der vorangehenden Ansprüche, **dadurch gekennzeichnet,** daß beide Teile (1,2) aus Hartmetall, Keramik oder einem anderen Stoff mit ähnlichen Materialeigenschaften bestehen.

6. Vorrichtung nach einem der vorangehenden Ansprüche, **dadurch gekennzeichnet,** daß der Zwischenabschnitt (9) lediglich beim buchsenförmigen Teil (2) vorgesehen ist.

7. Vorrichtung nach einem der vorangehenden Ansprüche, **dadurch gekennzeichnet,** daß eine oder mehrere Steckverbindungen in einer gemeinsamen Fassung zusammen mit einer oder mehreren galvanischen Steckverbindungen angeordnet sind.

## Claims

1. Plug connector apparatus having one or several optical fibre plug-in connections each made of two parts, one of which is formed in the shape of a pin and the other in the shape of a sleeve, respectively, and each of which has a cylindrical section, the dimensions of which cylindrical sections are matched to each other in such a way that, after the two parts are put together, the cylindrical section of the pin-shaped part is held centrally within the cylindrical section of the sleeve-shaped part, at least one of the parts having a front section in the shape of a truncated cone, and the said plug connector apparatus having devices for mounting in each case at least one of the two parts of each plug-in connection, with radial clearance being ensured, and having devices for the axial stressing of the respective part in the plug-in direction with a spring force, **characterised in that,** with at least one of the two parts (1, 2), there is provided, directly between the front section (8) in the shape of a truncated cone and the rear, cylindrical section (15), an intermediate section (9) in the shape of a truncated cone, the cone angle of which is smaller than that of the front section (8) in the shape of a truncated cone, in that the diameter of each of the truncated cone-shaped sections (8) of the pin-shaped part (1) increases in the direction of the cylindrical section (18) thereof, and in that the inner diameter of each of the truncated cone-shaped sections (8, 9) of the sleeve-shaped part (2) decreases in the direction of the cylindrical section (15) thereof.

2. Apparatus according to claim 1, **characterised in that** the devices for the axial stressing of parts in the plug-in direction with a spring force are formed by a respective helical spring (7) which is supported on a ring (6) resting against a wall (5), the bore of which ring (6), having one of the two parts (1, 2) passing through it, has a larger diameter than the part passing through.

3. Apparatus according to one of the preceding claims, **characterised in that** the radial clearance, with which one of the two parts is mounted, divides into equal parts, a clearance between the inner diameter (6a) of the ring (6) and the outer diameter (1a, 2a) of the corresponding part (1, 2), and a clearance between the outer diameter (6b) of the ring (6) and a boundary part (5a) limiting the space for clearance of motion of the ring (6), which boundary part (5a) is connected to the housing wall (5).

4. Apparatus according to claim 1 or 2, **characterised in that** the intermediate section (9) has a cone angle of less than 1 degree.

5. Apparatus according to one of the preceding claims, **characterised in that** the two parts (1, 2) consist of hard metal, ceramics or another substance having similar material properties.

6. Apparatus according to one of the preceding claims, **characterised in that** the intermediate section (9) is provided only in the case of the sleeve-shaped part (2).

7. Apparatus according to one of the preceding claims, **characterised in that** one or several plug-in connections are arranged in a common socket together with one or several galvanic plug-in connections.

## Revendications

1. Dispositif à enfichage comportant un ou plusieurs connecteurs de guides d'ondes optiques constitués respectivement de deux éléments, dont l'un est en forme de tige et l'autre en forme de douille et qui possèdent des sections cylindriques respectives, dont les dimensions sont accordées les unes sur les autres de sorte qu'après l'enfichage des deux éléments, la section cylindrique de la partie en forme de tige est maintenue centrée dans la section cylindrique de la partie en forme de douille, au moins l'un des éléments possédant une section tronconique avant, et comportant des dispositifs pour supporter au moins respectivement l'un des deux éléments de chaque connecteur tout en garantissant un jeu radial, et des dispositifs pour charger axialement l'élément considéré dans la direction d'enfichage avec une force élastique,
caractérisé en ce
que, dans d'au moins l'un des deux éléments (1,2), il est prévu, directement entre la section tronconique avant (8) et la section cylindrique arrière (15), une section intermédiaire de forme tronconique (9), dont l'angle du cône est inférieur à celui de la section tronconique avant (8), que le diamètre de chacune des sections tronconiques (8) de la partie en forme de tige (1) augmente en direction de sa section cylindrique (18) et que le diamètre intérieur de chacune des sections tronconiques (8,9) de la partie en forme de douille (2) diminue en direction de sa section cylindrique (15).

2. Dispositif selon la revendication 1, caractérisé en ce que les dispositifs servant à charger axialement des éléments dans la direction d'enfichage avec une force élastique sont formés respectivement par un ressort hélicoïdal (7) qui prend appui sur une bague (7) appliquée contre une paroi (5) et dont un perçage, qui traverse les deux éléments (1,2), possède un diamètre supérieur à celui de l'élément traversé.

3. Dispositif selon l'une des revendications précédentes, caractérisé en ce que le jeu radial avec lequel l'un des deux éléments est monté, se répartit d'une manière égale en un jeu présent entre le pourtour intérieur (6a) de l'anneau (6) et le pourtour extérieur (1a,2a) de l'élément correspondant (1,2), ainsi qu'en un jeu présent entre le pourtour extérieur (6b) de l'anneau (6) et une pièce de limitation (5a) qui limite le jeu de déplacement de l'anneau (6) et est raccordé à la paroi (5) du boîtier.

4. Dispositif selon la revendication 1 ou 2, caractérisé en ce que la section intermédiaire (9) possède un angle de cône inférieur à 1 degré.

5. Dispositif selon l'une des revendications précédentes, caractérisé en ce que les deux éléments (1,2) sont réalisés en un métal dur, céramique ou un autre matériau possédant des propriétés semblables.

6. Dispositif selon l'une des revendications précédentes, caractérisé en ce que la section intermédiaire (9) est prévue uniquement dans la partie en forme de douille (2).

7. Dispositif selon l'une des revendications précédentes, caractérisé en ce qu'un ou plusieurs connecteurs sont disposés dans une monture commune conjointement avec un ou plusieurs connecteurs galvaniques.